(19) Europäisches Patentamt
European Patent Office
Office européen des brevets

(11) **EP 2 621 096 B1**

(12) **EUROPEAN PATENT SPECIFICATION**

(45) Date of publication and mention
of the grant of the patent:
**29.04.2015 Bulletin 2015/18**

(51) Int Cl.:
*H04B 1/30* *(2006.01)* *H04L 27/36* *(2006.01)*
*H04L 27/38* *(2006.01)* *H04B 1/04* *(2006.01)*

(21) Application number: **12152957.2**

(22) Date of filing: **27.01.2012**

(54) **Mobile wireless communications device having auxiliary receiver to determine transmit impairment and generate transmit impairment compensation signal, and associated methods**

Mobile Drahtloskommunikationsvorrichtung mit Hilfsempfänger zur Bestimmung einer Sendebeeinträchtigung und Erzeugung eines Signals zum Ausgleich der Sendebeeinträchtigung sowie zugehörige Verfahren

Dispositif de communication mobile sans fil doté d'un récepteur auxiliaire permettant de déterminer un défaut de transmission et de générer un signal de compensation de défaut de transmission et procédés associés

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2013 Bulletin 2013/31**

(73) Proprietor: **BlackBerry Limited
Waterloo, ON N2K 0A7 (CA)**

(72) Inventor: **Muhammad, Khurram
Garland, TX Texas 75044 (US)**

(74) Representative: **Greenaway, Martin William et al
Kilburn & Strode LLP
20 Red Lion Street
London WC1R 4PJ (GB)**

(56) References cited:
**US-A1- 2003 045 249      US-A1- 2011 207 418
US-B1- 7 856 048**

## Description

### Technical Field

The present disclosure relates to the field of communications devices, and more particularly, communications devices with components that correct initial transmission impairments.

### Background

In general, undesired or non-ideal characteristics, such as transmission impairments (e.g. DC offset and in-phase/ quadrature-phase (IQ) imbalance), degrade performance of mobile transceivers. The DC offset is the effect of self mixing by a mixer, and occurs when a signal of a local oscillator (LO) returns after leaking toward an antenna or when a radio frequency (RF) modulation signal input through the antenna is leaked to the local oscillator. Another way to create DC offset is through an inherent offset in the amplifiers due to imbalances. If the DC offset is amplified by amplifiers in the signal path, then this way may saturate a baseband circuit.

The IQ imbalance is caused when the phase difference between the in-phase (I) channel signal and the quadrature-phase (Q) channel signal generated in an oscillator of a wireless transmitter is not 90 degrees. The IQ imbalance can be reduced by designing mixers of the I channel demodulator and the Q channel demodulator to be precisely 90 degrees in phase delay (i.e., orthogonal) to each other. However, designing the mixers so that there is precisely a 90 degrees phase difference to each other is not practical over process and temperature variations. This is because in the layout, the I and Q paths to the mixers traverse different lengths despite the best effort of keeping everything symmetrical. This is especially true for multi-band systems. An IQ imbalance increases the Bit Error Rate (BER), thereby degrading the performance of the wireless transceiver. Moreover, IQ imbalances results in distorted images of the wanted signal being created. These distorted images may superimpose over the wanted signal, thereby degrading performance of the wanted signal. Current methods of dealing with IQ imbalances seek to both reduce the IQ imbalance and filter out the distorted images of the wanted signal.

Such current methods to correct IQ imbalances are determined by the dynamic range of the receiver used to detect the IQ imbalance. If the signal of interest and its image can not be observed with the available dynamic range, the image can not be detected or seen by processing circuitry that attempts to compute the complex image power. For example, if the image of 60dB below the signal of interest, an analog to digital converter (ADC) with a 60dB dynamic range will not show the image signal, particularly when the gain of the receive path is reduced. Hence, ADCs with high dynamic ranges are helpful for detecting the image signal when a reasonable headroom is desired between the signal received and the maximum input level of the ADC.

This issue becomes worse when higher image rejection is desired to allow a higher separation between the frequency of a local oscillator and the carrier frequencies. Hence, the dynamic range desired directly depends on the frequency separation and the amount of resulting desired resistance to VCO pulling in the design.

Therefore, there is still a need to improve such IQ imbalance compensation, and a need to reduce transmission impairments and the associated distortion in mobile transmitters.

US 2003/045249 discloses an example of transmit impairment compensation during transmission of data.

### Brief Description of the Drawings

FIG. 1 is a schematic block diagram of a first embodiment of a communications device the present disclosure.
FIG. 2 is a schematic block diagram of a second embodiment of a communications device of the present disclosure.
FIGS. 3A-3D illustrate the baseband signal, transmit signal, and receive signal at various points of time.
FIG. 4 is a schematic block diagram illustrating components of a mobile wireless communications device in accordance with an example embodiment of the present disclosure.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a mobile wireless communications device may comprise a baseband input configured to receive a baseband signal. A transmitter may be coupled to the baseband input and configured to generate a transmit signal based upon the baseband signal, the transmit signal having an initial transmit impairment. In addition, an auxiliary receiver may be coupled to the transmitter and may be configured to generate a receive signal having a receive impairment therein resulting from the initial transmit impairment. A controller may be coupled to the baseband input and the auxiliary receiver. The controller may be configured to determine a power of the baseband signal by integrating a product of the receive signal and a complex conjugate of the baseband signal, and determine a power of the receive signal by integrating a product of the baseband signal and the receive signal. The controller may further be configured to determine the initial transmit impairment based upon the power of the baseband signal and the power of the receive signal, and generate a transmit impairment compensation signal based upon the initial transmit impairment.

The controller may be configured to determine the power of the baseband signal and the power of the receive signal sequentially. Alternatively, the controller may comprise a first correlator configured to determine the power of the baseband signal, and a second correlator configured to determine the power of the receive signal.

In addition, the controller may comprise a delay block configured to delay the baseband signal before determination of the power of the baseband signal and the power of the receive signal. The transmit signal may include an in-phase (I) component and a quadrature-phase (Q) component.

The transmitter may include a transmit impairment compensator coupled to the controller and configured to compensate the transmit signal based on the transmit impairment compensation signal. In addition, the transmitter may have at least one digital-to-analog converter (DAC) coupled downstream of the baseband input. Also, the transmitter may also include at least one mixer coupled downstream of the at least one DAC.

The transmitter may further comprises a phase locked loop (PLL) coupled to the at least one mixer. The transmitter may also include at least one power amplifier downstream from the at least one mixer.

The auxiliary receiver may include a low noise amplifier (LNA), and at least one mixer coupled downstream of the LNA. The auxiliary receiver may further have a receiver phase locked loop (RXPLL) coupled to the at least one mixer. The auxiliary receiver may also have at least one analog-to-digital converter (ADC) coupled downstream of the at least one mixer.

A method aspect is directed to a method of operating a mobile wireless communications device comprising receiving a baseband signal at a baseband input. The method also includes generating a transmit signal based upon the baseband signal, the transmit signal having an initial transmit impairment, using a transmitter coupled to the baseband input.

The method further includes generating a receive signal having a receive impairment therein resulting from the initial transmit impairment, using an auxiliary receiver coupled to the transmitter. The method then proceeds with determining a power of the baseband signal by integrating a product of the receive signal and a complex conjugate of the baseband signal, using a controller coupled to the baseband input and the auxiliary receiver. The method further proceeds with determining a power of the receive signal by integrating a product of the baseband signal and the receive signal, using the controller, and determining the initial transmit impairment based upon the power of the baseband signal and the power of the receive signal, using the controller. The method then involves generating a transmit impairment compensation signal based upon the initial transmit impairment, using the controller.

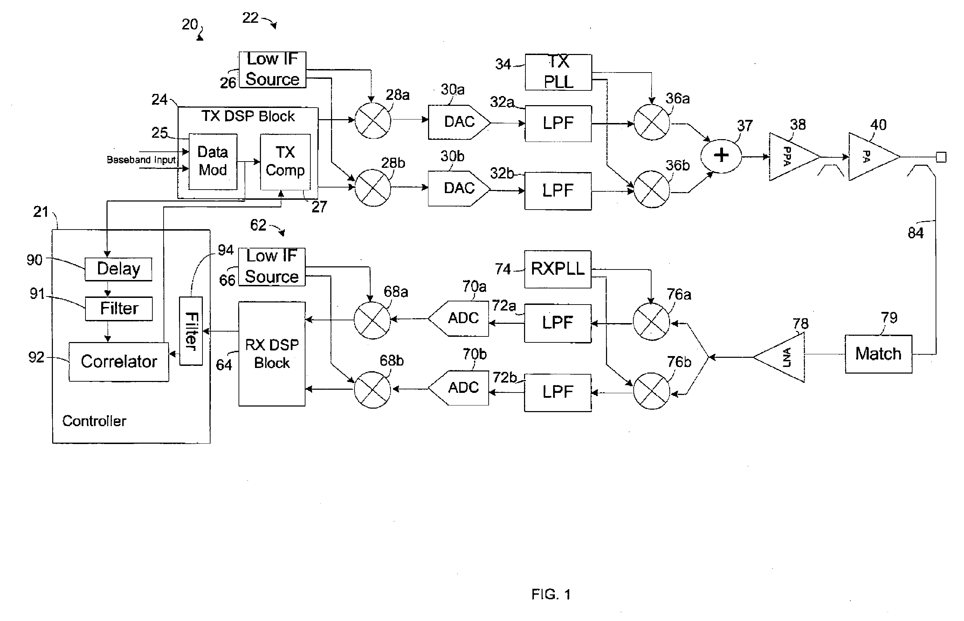

With reference to FIG. 1, a communications device **20** is now described. The communications device **20** may be a mobile wireless communications device, such as a smartphone. The communications device **20** may be a multifrequency band device that operates over a 2.4 GHz frequency band (i.e., approximately 2.4 to 2.483 GHz) and over a 5 GHz frequency band (i.e., approximately 4.9 to 6 GHz), for example. Depending on the intended application, the communications device **20** may operate over other frequency bands, as readily appreciated by those skilled in the art.

The communications device **20** includes a transmitter **22,** and an auxiliary receiver **62.** As will be explained in detail below, a controller **21** uses the auxiliary receiver **62** to detect impairments such as initial IQ imbalances in signals output by the transmitter **22** and directs the digital signal processing (DSP) block **24** of the transmitter to correct input baseband signals so as to reduce the IQ imbalance in the signals output by the transmitter. The auxiliary receiver **62** is coupled to the transmitter **24.**

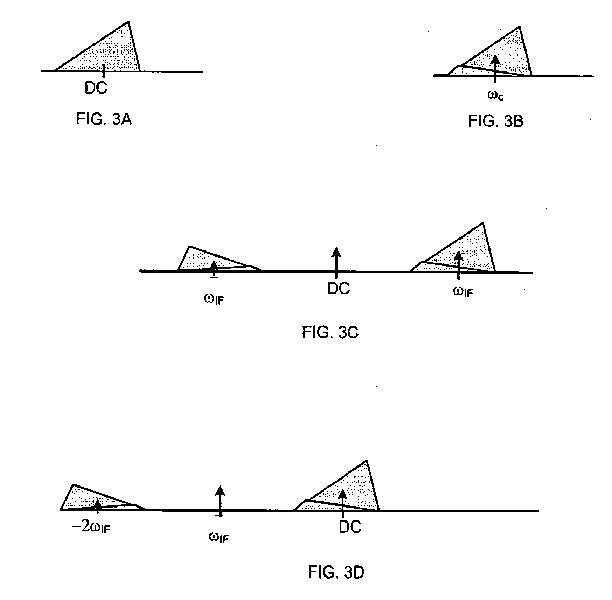

The transmitter **22** will now be described in detail. The transmitter **22** includes a transmit (TX) DSP block **24** configured to receive a baseband signal at a baseband input, and to then output a baseband signal having in-phase (I) and quadrature (Q) components and to therefore generate and output complex IQ signals. The baseband signal received at the baseband input is shown in FIG. 3A. The complex IQ signals have an IQ imbalance caused by other components of the transmitter **22,** meaning that there may be a phase imbalance between the I and Q signals (e.g. I and Q are not 90° apart in phase). The TX DSP block **24** comprises a data modulator **25** that generates the baseband signal, and a transmit compensator (TX compensator) **27** coupled thereto. As will be explained below, the controller **21** corrects the initial IQ imbalance using the TX compensator **27.**

The I and Q outputs from the TX DSP block **24** are mixed by the mixers **28a, 28b** to a low intermediate frequency (IF) by a low IF source **26** coupled to the mixers. Digital to analog converters (DACs) **30a, 30b** are coupled to the mixers **28a, 28b,** and low pass filters **32a, 32b** are coupled to the DACs.

Mixers **36a, 36b** are coupled to the low pass filters **32a, 32b.** The complex IQ signals are driven to the desired transmit frequency by the transmitter phase locked loop **34,** which is coupled to the mixers **36a, 36b.** The complex IQ signals (now at the desired transmit frequency) are summed by the summer **37,** and then fed downstream to a pre-power amplifier **38,** and in turn to a power amplifier **40.** The power amplifier **40** outputs a RF modulated signal having the initial IQ imbalance. The pre-power amplifier **38** is used to ensure that there is enough power to drive the power amplifier **40.**

An RF modulated signal having the initial IQ imbalance from the transmitter **22** is provided to the auxiliary receiver **62** using a non-directional coupler **84** coupled between the power amplifier **40** and the antenna (not shown), and is therefore received as a receive baseband signal. A graph of an example receive baseband signal is shown in FIG. 3B.

An advantage of using a non-directional coupler **84** is that it can operate over a wide band of operation, and its performance remains well controlled over temperature and frequency changes. In addition, a non-directional coupler **84** helps to prevent the PLL **74** of the auxiliary receiver **62** from parasitically coupling to the output of the transmitter **16.** Instead of using a non-directional coupler, it is possible to use a directional coupler. The use of a directional coupler provides a steady feedback signal independent of the VSWR variation at the antenna or the PPA load. However, a non-directional coupler is preferred because it is wideband and simpler to implement.

The auxiliary receiver **62** can be of lower performance as compared to a main receiver (not shown) of the communications device **20** since it is primarily designed to serve the transmitter **22.** For example, the auxiliary receiver **62** may not need to have a high dynamic range like a main receiver, nor a high selectivity.

The auxiliary receiver **62** is configured to have an independent, dedicated phase-locked loop **74** that is offset from the TX PLL **34** operating the transmitters **22.** This advantageously allows the initial IQ imbalance, to be separated in the frequency domain from IQ imbalances or other impairments added in the auxiliary receiver **62.**

As explained above, the auxiliary receiver **62** includes a low noise amplifier **78** to receive the RF modulated signal having the IQ imbalance. The output of the low noise amplifier **78** is provided to the mixers **76a, 76b.** The auxiliary receiver **62** is configured as a 0-IF receiver since the transmitter **22** is configured as low-IF transmitter (i.e., dual-mixer mode). This means that a second set of mixers **68a, 68b** may not be needed and is selectively set to a value of 1 (i.e., $e^{j0}$) by the source **66.**

The mixers **76a, 76b** receive the RF modulated signal having the IQ imbalance, and I and Q local oscillator signals from the RX PLL **74.** As noted above, the auxiliary receiver **62** is configured to have an independent, dedicated phase-locked loop **74** that is offset from the PLL's **34, 54** of the transmitters **22, 42.** This advantageously allows the initial IQ imbalance in the RF modulated signal to be separated in the frequency domain from impairments added in the auxiliary receiver **62.**

The output of the mixers **76a, 76b** provide receive modulated analog I and Q component signals at the intermediate frequency. These signals are provided to low pass filters **72a, 72b** and then to analog-to-digital converters **70a, 70b** so that the receive baseband modulated analog I and Q component signals are now receive baseband modulated digital I and Q component signals at the intermediate frequency. The receive baseband modulated digital I and Q component signals at the intermediate frequency include the receive impairment (initial IQ imbalance) spectrally separated from the transmit impairment. Example receive baseband signals after the ADCs **70a, 70b** are shown in FIG. 3C. These signals are passed through the mixers **68a, 68b,** which translate this complex signal to zero-IF in a second down-conversion operation by frequency using the low IF source **46.** Example receive signals, after downconversion to zero-IF, are shown in FIG. 3D.

The controller **21** is coupled to the output of the data modulator **25** and to the output of the auxiliary receiver **62.** The controller **21** receives the transmit baseband modulated signal from the data modulator **25.** The transmit baseband modulated signal is also referred to as the reference signal since it does not include the initial IQ imbalance from the transmitter **22.**

The controller **21** also receives the receive baseband modulated signal as provided by the auxiliary receiver **62.** The receive baseband modulated signal includes the transmit baseband modulated signal as well as the receive impairment spectrally separated from the transmit impairment.

The controller **21** includes a delay circuit **90** configured to delay the transmit baseband modulated signal so that this signal and the receive baseband modulated signal match up in time when compared. The delay circuit **90** may be configured to implement a fixed delay corresponding to inherent delays of the transmitter **22** and the auxiliary receiver **62,** and a variable delay corresponding to variable environmental conditions. The variable delay accounts for environmental conditions, such as operating temperature variations, for example. In particular, the analog sections within the transmitter **22** and the auxiliary receiver **62** are affected by temperature variations.

The correlator **92** within the controller **21** estimates the IQ imbalance and other impairment within the transmitter **22** and generates an IQ or impairment compensation signal for that transmitter based on the estimated transmit impairment. To estimate the impairment (IQ imbalance), the correlator **92** determines a complex power value of the baseband signal and the receive signal, and then determines the transmit impairment based thereupon. In particular, the correlator **92** determines a power of the baseband signal by integrating a product of the receive signal and a complex conjugate of the baseband signal, and then determines a power of the receive signal by integrating a product of the baseband signal and the receive signal. The correlator then **92** then determines the initial transmit impairment based upon the power of the baseband signal and the power of the receive signal, and generate a transmit impairment compensation signal based upon the initial transmit impairment.

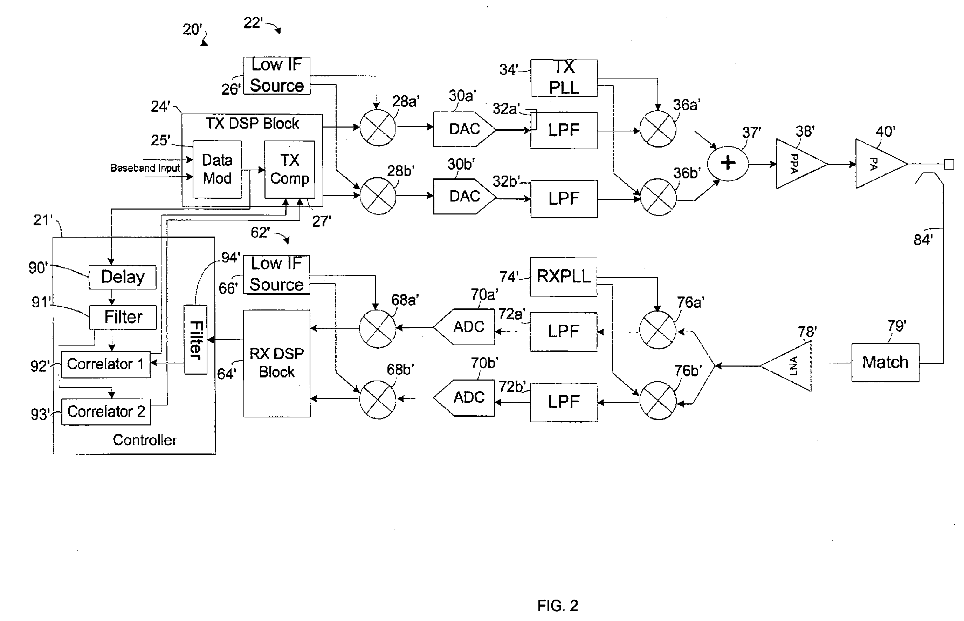

In some applications, as shown in FIG. 2, one correlator **92'** determines the power of the baseband signal, while another correlator **93'** determines the power of the received signal. This allows parallel processing of the powers, as opposed to sequential processing of the powers are performed by the correlator **92** in FIG. 1.

Returning now to the discussion of FIG. 1, as stated above, the transmitter **22** includes a transmit impairment compensator **27** configured to compensate the transmit baseband modulated_signal based on the compensation signal. The transmit impairment compensator **27** is positioned between the data modulator **25** and the mixers **28a, 28b.** Alternatively, the transmit impairment compensator **27** may be implemented within the controller itself if the transmitter chain is routed through the controller **21**.

Details of estimating the transmit impairment, using the correlator **92** are now given. The received signal with an IQ imbalance and a dc offset can be described as:

$$rx(t) = A(t)\left(e^{j\varphi(t)} + \beta e^{-j\varphi(t)}\right) + dc + q(t)$$

where q(t) represents the quantization and other noise. Normally, rx(t) is processed directly to evaluate the IQ imbalance or DC offset by a digital block. Specifically for computing the DC offset, a LPF is used. The IQ imbalance can be computed through many techniques such as the ones described in copending case "WIRELESS COMMUNICATIONS DEVICE WITH IMPAIRMENT COMPENSATION AND ASSOCIATED METHODS," Attorney Docket Number 85311, assigned to the same assignee as this application.

The received signal is discretized by the ADC to generate a symbol sequence, rx(nTs) where Ts is the sampling period and m is the time index. It should be noted that rx(nTs) will be conveniently referred to as rx(n), where n now represents the time index. We define a sequence, s(n) that is obtained from M successive symbols of rx(n) as follows:

$$s(k) = \sum_{n=kM}^{(k+1)M-1} rx(n) \cdot A(n)e^{j\varphi(n)}$$

where k is an integer index for 0 onwards. Then s(k) is equivalent to

$$s(k) = \sum_{n=kM}^{(k+1)M-1} \left[A(n)\left(e^{j\varphi(n)} + \beta e^{-j\varphi(n)}\right) + dc + q(n)\right] \cdot A(n)e^{j\varphi(n)}$$

$$= \sum_{n=kM}^{(k+1)M-1} A^2(n)e^{j2\varphi(n)} + \beta \sum_{n=kM}^{(k+1)M-1} A^2(n) + dc \sum_{n=kM}^{(k+1)M-1} A(n)e^{j\varphi(n)} + \sum_{n=kM}^{(k+1)M-1} q(n)A(n)e^{j\varphi(n)}$$

Assuming that $\varphi$ is uniformly distributed between 0 and which $2\pi$ is a reasonable assumption for modulation data. For large M, all the terms remain small except for $\beta \sum_{n=kM}^{(k+1)M-1} A^2(n)$ as it keeps on accumulating and growing.

In other words,

$$s(k) \approx \beta \sum_{n=kM}^{(k+1)M-1} A^2(n)$$

This extracts the image power from rx(n), while rejecting the noise and the other terms. M resembles the "processing gain" that may be exploited in dispreading spread-spectrum signals and allows the image signal below the quantization noise floor of the ADC to be observable in the DSP path. When the receive mixer has a phase offset from the received signal, the quantity s(k) extracted from the averaging circuit is given as:

$$s(k) \approx \beta \sum_{n=kM}^{(k+1)M-1} A^2(n) \, e^{j\theta} = \beta e^{j\theta} \sum_{n=kM}^{(k+1)M-1} A^2(n)$$

This makes s(k) a complex number rather than real. The transmitter IQ imbalance decreases if the power of s(k) decreases. Hence image power (IP) can be measured as:

$$IP = \frac{1}{L} \sum_{k=0}^{L} s^2(k)$$

In this definition, the smaller the value of IP, the higher is the image rejection. The choice of M and/or L depends on how selective the filter extracting the imbalance is desired to be. In general, higher IQ balance can be achieved with a higher M and L. that will reduce IP defined above.

The image power measured can be used as a metric that defines the effectiveness of tuning. IQ balance in the receiver is restored through the compensator:

$$cx(n) = rx(n) + w_2 rx^*(n)$$

where cx(n) is the compensated output. By tuning one complex variable, w2, IQ balance can be restored. When used in the transmitter, the imbalance is compensated for in the forward TX path by applying a correction term of $w_2 tx^*(n)$. Hence, the transmitted signal is $tx'(n) = tx(n) + w_2 tx^*(n)$. In both these cases, the goal is update $w_2$ such that IP detected is reduced over the measurement window due to the update. An update in $w_2$ in the right direction will reduce the measured IP.

Signal power can be simply determined by defining:

$$p(k) = \sum_{n=kM}^{(k+1)M-1} rx(n) \cdot A(n) e^{-j\varphi(n)}$$

The same engine will now measure the power of the desired signal, instead of the image.

$$p(k) \approx \sum_{n=kM}^{(k+1)M-1} A^2(n) \, e^{j\theta} = \beta e^{j\theta} \sum_{n=kM}^{(k+1)M-1} A^2(n)$$

Where θ is the phase rotation introduced in the RX mixer.

In summary, by using $s(k) = \sum_{n=kM}^{(k+1)M-1} rx(n) \cdot A(n) e^{j\varphi(n)}$ instead of rx(n) to determine the IQ imbalance, the averaging operating allows achieving a higher dynamic range than the capability of the ADC **70a, 70b** used. A lower resolution ADC **70a, 70b** can now be used while still having the ability to observe a very small image power below the quantization noise floor of the ADC. This is because the signal of interest is being transmitted, and s(k) is being used to detect the image power.

The receive impairment compensator, or RX DSP Block **64** is at the output of the mixers **68a, 68b.** Alternatively, the receive impairment compensator **64** may be implemented within the controller itself if the receive chain is routed through the controller **21.** As discussed above for the estimation and compensation of the transmit impairment, an inverse system modeling is also used for the receive impairment

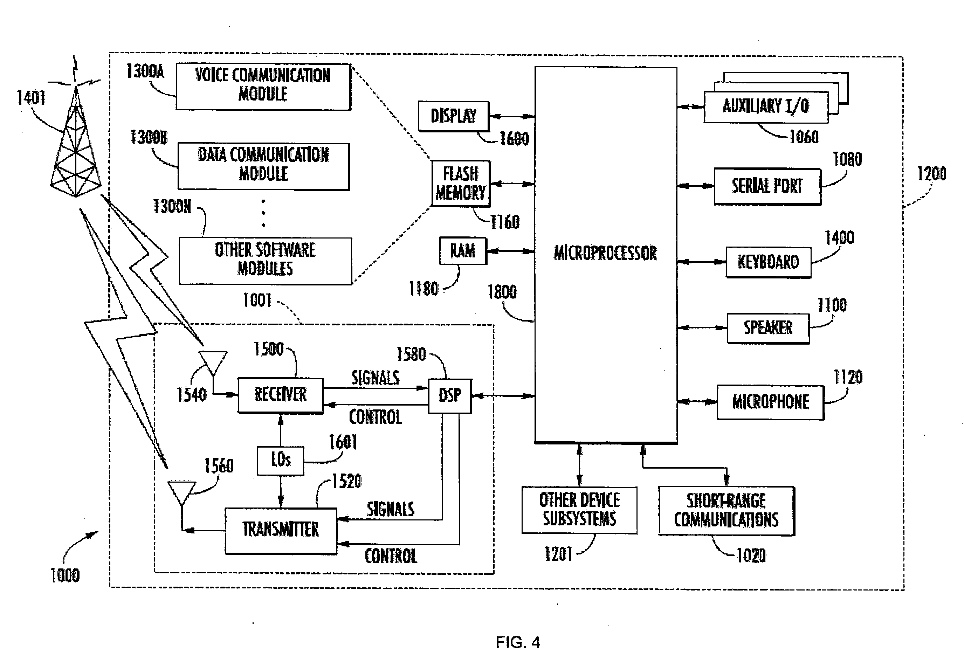

Example components of a hand-held mobile wireless communications device **1000** that may be used in accordance with the present disclosure are further described in the example below with reference to FIG. 4. The device **1000** illustratively includes a housing **1200,** a keypad **1400** and an output device **1600**. The output device shown is a display **1600,** which may comprise a full graphic LCD. In some example embodiments, display **1600** may comprise a touch-sensitive input and output device. Other types of output devices may alternatively be utilized. A processing device **1800** is contained within the housing **1200** and is coupled between the keypad **1400** and the display **1600**. The processing device **1800** controls the operation of the display **1600,** as well as the overall operation of the mobile device **1000,** in response to actuation of keys on the keypad **1400** by the user. In some example embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800,** in addition to its operating system functions, enables execution of software applications **1300A-1300N** on the device **1000**. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560**. In addition, the communications subsystem **1001** also includes a processing module, such as a digital signal processor (DSP) **1580,** and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver 1500 and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600,** or alternatively to some other auxiliary I/O device **1060**. A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

**Claims**

1.    A mobile wireless communications device (20) comprising:

a baseband input configured to receive a baseband signal;
a transmitter (22) coupled to said baseband input and configured to generate a transmit signal based upon the baseband signal, the transmit signal having an initial transmit impairment;
an auxiliary receiver (62) coupled to said transmitter and configured to generate a receive signal having a receive impairment therein resulting from the initial transmit impairment;
a controller (21) coupled to said baseband input and said auxiliary receiver, said controller configured to

determine a power of the baseband signal by integrating a product of the receive signal and a complex conjugate of the baseband signal,
determine a power of the receive signal by integrating a product of the baseband signal and the receive signal,
determine the initial transmit impairment based upon the power of the baseband signal and the power of the receive signal, and
generate a transmit impairment compensation signal based upon the determined initial transmit impairment.

2.    The mobile wireless communications device (20) of Claim 1, wherein said controller (21) is configured to determine the power of the baseband signal and the power of the receive signal sequentially.

3.    The mobile wireless communications device (20') of Claim 1, wherein said controller (21') comprise a first correlator (92') configured to determine the power of the baseband signal, and a second correlator (93') configured to determine the power of the receive signal.

4.    The mobile wireless communications device (20) of Claim 1, wherein said controller (21) comprises a delay block (90) configured to delay the baseband signal before determination of the power of the baseband signal and the power of the receive signal.

5.    The mobile wireless communications device (20) according to Claim 1 wherein the transmit signal comprises an in-phase (I) component and a quadrature-phase (Q) component.

6.    The wireless communications device according to Claim 1 wherein said transmitter (22) comprises a transmit impairment compensator (27) coupled to said controller (21) and configured to compensate the transmit signal based on the transmit impairment compensation signal.

7. The mobile wireless communications device (20) of Claim 1, wherein said transmitter (22) comprise at least one digital-to-analog converter (DAC) (30a, 30b) coupled downstream of said baseband input.

8. The mobile wireless communications device (20) of Claim 7, wherein said transmitter (22) further comprises at least one mixer (36a, 36b) coupled downstream of said at least one DAC (30a, 30b).

9. The mobile wireless communications device (20) of Claim 8, wherein said transmitter (22) further comprises a phase locked loop (PLL) (34) coupled to said at least one mixer (36a, 36b).

10. The mobile wireless communications device (20) of Claim 8, wherein said transmitter (22) further comprises at least one power amplifier (40) downstream from said at least one mixer (36a, 36b).

11. The mobile wireless communications device (20) of Claim 1, wherein said auxiliary receiver (62) comprises a low noise amplifier (LNA) (78), and at least one mixer (76a, 76b) coupled downstream of said LNA.

12. The mobile wireless communications device (20) of Claim 11, wherein said auxiliary receiver (62) further comprises a receiver phase locked loop (RXPLL) (74) coupled to said at least one mixer (76a, 76b).

13. A method of operating a mobile wireless communications device (20) comprising:

receiving a baseband signal at a baseband input;
generating a transmit signal based upon the baseband signal, the transmit signal having an initial transmit impairment, using a transmitter (22) coupled to the baseband input;
generating a receive signal having a receive impairment therein resulting from the initial transmit impairment, using an auxiliary receiver (62) coupled to said transmitter;
determining a power of the baseband signal by integrating a product of the receive signal and a complex conjugate of the baseband signal, using a controller (21) coupled to the baseband input and the auxiliary receiver;
determining a power of the receive signal by integrating a product of the baseband signal and the receive signal, using the controller;
determining the initial transmit impairment based upon the power of the baseband signal and the power of the receive signal, using the controller; and
generating a transmit impairment compensation signal based upon the determined initial transmit impairment, using the controller.

14. The method of Claim 13, further comprising compensating the transmit signal based on the transmit impairment compensation signal, using a transmit impairment compensator (27) coupled to said controller.

15. The method of Claim 13, further comprising delaying the baseband signal before determination of the power of the baseband signal and the power of the receive signal, using a delay block (90).

**Patentansprüche**

1. Mobile drahtlose Kommunikationsvorrichtung (20), die umfasst:

einen Basisbandeingang, der konfiguriert ist, ein Basisbandsignal zu empfangen;
einen Sender (22), der mit dem Basisbandeingang gekoppelt ist und konfiguriert ist, ein Sendesignal anhand des Basisbandsignals zu erzeugen, wobei das Sendesignal eine anfängliche Sendebeeinträchtigung besitzt;
einen Hilfsempfänger (62), der mit dem Sender gekoppelt ist und konfiguriert ist, ein Empfangssignal zu erzeugen, das eine Empfangsbeeinträchtigung besitzt, die aus der anfänglichen Sendebeeinträchtigung resultiert;
eine Steuereinheit (21), die mit dem Basisbandeingang und mit dem Hilfsempfänger gekoppelt ist, wobei die Steuereinheit konfiguriert ist,

eine Leistung des Basisbandsignals durch Integrieren eines Produkts des Empfangssignals und einer Komplexkonjugierten des Basisbandsignals zu bestimmen,
eine Leistung des Empfangssignals durch Integrieren eines Produkts des Basisbandsignals und des Empfangssignals zu bestimmen,
die anfängliche Sendebeeinträchtigung anhand der Leistung des Basisbandsignals und der Leistung des Empfangssignals zu bestimmen, und
ein Sendebeeinträchtigungs-Kompensationssignal anhand der bestimmten anfänglichen Sendebeeinträchtigung zu erzeugen.

2. Mobile drahtlose Kommunikationsvorrichtung (20) nach Anspruch 1, wobei die Steuereinheit (21) konfiguriert ist, die Leistung des Basisbandsignals und die Leistung des Empfangssignals sequentiell zu bestimmen.

3. Mobile drahtlose Kommunikationsvorrichtung (20') nach Anspruch 1, wobei die Steuereinheit (21') einen ersten Korrelator (92'), der konfiguriert ist, die Leistung des Basisbandsignals zu bestimmen, und einen zweiten Korrelator (93'), der konfiguriert ist, die Leistung des Empfangssignals zu bestimmen, umfasst.

4. Mobile drahtlose Kommunikationsvorrichtung (20) nach Anspruch 1, wobei die Steuereinheit (21) einen Verzögerungsblock (90) umfasst, der konfiguriert ist, das Basisbandsignal vor dem Bestimmen der Leistung des Basisbandsignals und der Leistung des Empfangssignals zu verzögern.

5. Mobile drahtlose Kommunikationsvorrichtung (20) nach Anspruch 1, wobei das Sendesignal eine Inphase-Komponente (I) und eine Quadraturphase-Komponente (Q) umfasst.

6. Drahtlose Kommunikationsvorrichtung nach Anspruch 1, wobei der Sender (22) einen Sendebeeinträchtigungs-Kompensierer (27) umfasst, der mit der Steuereinheit (21) gekoppelt ist und konfiguriert ist, das Sendesignal anhand des Sendebeeinträchtigungs-Kompensationssignals zu kompensieren.

7. Mobile drahtlose Kommunikationsvorrichtung (20) nach Anspruch 1, wobei der Sender (22) wenigstens einen Digital/Analog-Umsetzer (DAC) (30a, 30b), der dem Basisbandeingang nachgeschaltet ist, umfasst.

8. Mobile drahtlose Kommunikationsvorrichtung (20) nach Anspruch 7, wobei der Sender (22) ferner wenigstens einen Mischer (36a, 36b), der dem wenigstens einen DAC (30a, 30b) nachgeschaltet ist, umfasst.

9. Mobile drahtlose Kommunikationsvorrichtung (20) nach Anspruch 8, wobei der Sender (22) ferner eine Phasenverriegelungsschleife (PLL) (34), die mit dem wenigstens einen Mischer (36a, 36b) gekoppelt ist, umfasst.

10. Mobile drahtlose Kommunikationsvorrichtung (20) nach Anspruch 8, wobei der Sender (22) ferner wenigstens einen Leistungsverstärker (40), der dem wenigstens einen Mischer (36a, 36b) nachgeschaltet ist, umfasst.

11. Mobile drahtlose Kommunikationsvorrichtung (20) nach Anspruch 1, wobei der Hilfsempfänger (62) einen Verstärker (78) mit niedrigem Rauschen (LNA) und wenigstens einen Mischer (76a, 76b), der dem LNA nachgeschaltet ist, umfasst.

12. Mobile drahtlose Kommunikationsvorrichtung (20) nach Anspruch 11, wobei der Hilfsempfänger (62) ferner eine Empfänger-Phasenverriegelungsschleife (RXPLL) (74), die mit dem wenigstens einen Mischer (76a, 76b) gekoppelt ist, umfasst.

13. Verfahren zum Betreiben einer mobilen drahtlosen Kommunikationsvorrichtung (20), das umfasst:

Empfangen eines Basisbandsignals an einem Basisbandeingang;
Erzeugen eines Sendesignals anhand des Basisbandsignals, wobei das Sendesignal eine anfängliche Sendebeeinträchtigung besitzt, unter Verwendung eines Senders (22), der mit dem Basisbandeingang gekoppelt ist;
Erzeugen eines Empfangssignals, das eine Empfangsbeeinträchtigung besitzt, die aus der anfänglichen Sendebeeinträchtigung resultiert, unter Verwendung eines Hilfsempfängers (62), der mit dem Sender gekoppelt ist;
Bestimmen einer Leistung des Basisbandsignals durch Integrieren eines Produkts des Empfangssignals und einer Komplexkonjugierten des Basisbandsignals unter Verwendung einer Steuereinheit (21), die mit dem Basisbandeingang und mit dem Hilfsempfänger gekoppelt ist;
Bestimmen einer Leistung des Empfangssignals durch Integrieren eines Produkts des Basisbandsignals und des Empfangssignals unter Verwendung der Steuereinheit;
Bestimmen der anfänglichen Sendebeeinträchtigung anhand der Leistung des Basisbandsignals und der Leistung des Empfangssignals unter Verwendung der Steuereinheit; und
Erzeugen eines Sendebeeinträchtigungs-Kompensationssignals anhand der bestimmten anfänglichen Sendebeeinträchtigung unter Verwendung der Steuereinheit.

**14.** Verfahren nach Anspruch 13, das ferner das Kompensieren des Sendesignals anhand des Sendebeeinträchtigungs-Kompensationssignals unter Verwendung eines Sendebeeinträchtigungs-Kompensierers (27), der mit der Steuereinheit gekoppelt ist, umfasst.

**15.** Verfahren nach Anspruch 13, das ferner das Verzögern des Basisbandsignals vor dem Bestimmen der Leistung des Grundbandsignals und der Leistung des Empfangssignals unter Verwendung eines Verzögerungsblocks (90) umfasst.

## Revendications

**1.** Dispositif de communication mobile sans fil (20) comprenant :

une entrée en bande de base configurée pour recevoir un signal en bande de base ;
un émetteur (22) couplé à ladite entrée en bande de base et configuré pour produire un signal d'émission fondé sur le signal en bande de base, le signal d'émission ayant un défaut d'émission initial ;
un récepteur auxiliaire (62) couplé audit émetteur et configuré pour produire un signal de réception présentant un défaut de réception qui résulte du défaut d'émission initial ;
un contrôleur (21) couplé à ladite entrée en bande de base et audit récepteur auxiliaire, ledit contrôleur étant configuré pour :

déterminer une puissance du signal en bande de base en intégrant un produit du signal de réception et un conjugué complexe du signal en bande de base ;
déterminer une puissance du signal de réception en intégrant un produit du signal en bande de base et du signal de réception ;
déterminer le défaut d'émission initial en fonction de la puissance du signal en bande de base et de la puissance du signal de réception ; et
produire un signal de compensation du défaut d'émission en fonction du défaut d'émission initial qui a été déterminé.

**2.** Dispositif de communication mobile sans fil (20) selon la revendication 1, dans lequel ledit contrôleur (21) est configuré pour déterminer la puissance du signal en bande de base et la puissance du signal de réception séquentiellement.

**3.** Dispositif de communication mobile sans fil (20') selon la revendication 1, dans lequel ledit contrôleur (21') comprend un premier corrélateur (92') configuré pour déterminer la puissance du signal en bande de base et un second corrélateur (93') configuré pour déterminer la puissance du signal de réception.

**4.** Dispositif de communication mobile sans fil (20) selon la revendication 1, dans lequel ledit contrôleur (21) comprend un bloc à retard (90) configuré pour retarder le signal en bande de base avant la détermination de la puissance du signal en bande de base et de la puissance du signal de réception.

**5.** Dispositif de communication mobile sans fil (20) selon la revendication 1, dans lequel le signal d'émission comprend une composante en phase (I) et une composante en quadrature (Q).

**6.** Dispositif de communication sans fil selon la revendication 1, dans lequel ledit émetteur (22) comprend un module compensateur de défaut d'émission (27) couplé audit contrôleur (21) et configuré pour compenser le signal d'émission en fonction du signal de compensation de défaut d'émission.

**7.** Dispositif de communication mobile sans fil (20) selon la revendication 1, dans lequel ledit émetteur (22) comprend au moins un convertisseur numérique-analogique (CNA) (30a, 30b) couplé en aval de ladite entrée en bande de base.

**8.** Dispositif de communication mobile sans fil (20) selon la revendication 7, dans lequel ledit émetteur (22) comprend en outre au moins un mélangeur (36a, 36b) couplé en aval dudit au moins un CNA (30a, 30b).

**9.** Dispositif de communication mobile sans fil (20) selon la revendication 8, dans lequel ledit émetteur (22) comprend en outre une boucle verrouillée en phase (34) couplée audit au moins un mélangeur (36a, 36b).

**10.** Dispositif de communication mobile sans fil (20) selon la revendication 8, dans lequel ledit émetteur (22) comprend en outre au moins un amplificateur de puissance (40) en aval dudit au moins un mélangeur (36a, 36b).

**11.** Dispositif de communication mobile sans fil (20) selon la revendication 1, dans lequel ledit récepteur auxiliaire (62) comprend un amplificateur à faible bruit (78) et au moins un mélangeur (76a, 76b) couplé en aval dudit au moins un amplificateur à faible bruit.

**12.** Dispositif de communication mobile sans fil (20) selon la revendication 11, dans lequel ledit récepteur auxiliaire (62) comprend en outre une boucle verrouillée en phase de récepteur (74) couplée audit au moins un mélangeur (76a, 76b).

**13.** Procédé de fonctionnement d'un dispositif de communication mobile sans fil (20), comprenant les étapes consistant à :

recevoir un signal en bande de base sur une entrée en bande de base ;
produire un signal d'émission fondé sur le signal en bande de base, le signal d'émission ayant un défaut d'émission initial, à l'aide d'un émetteur (22) couplé à ladite entrée en bande de base ;
produire un signal de réception présentant un défaut de réception qui résulte du défaut d'émission initial, sur un récepteur auxiliaire (62) couplé audit émetteur ;
déterminer une puissance du signal en bande de base en intégrant un produit du signal de réception et un conjugué complexe du signal en bande de base, à l'aide d'un contrôleur (21) couplé à l'entrée en bande de base et au récepteur auxiliaire ;
déterminer une puissance du signal de réception en intégrant un produit du signal en bande de base et du signal de réception, à l'aide du contrôleur ;
déterminer le défaut d'émission initial en fonction de la puissance du signal en bande de base et de la puissance du signal de réception, à l'aide du contrôleur ; et
produire un signal de compensation du défaut d'émission en fonction du défaut d'émission initial qui a été déterminé, à l'aide du contrôleur.

**14.** Procédé selon la revendication 13, comprenant en outre l'étape consistant à compenser le signal d'émission en fonction du signal de compensation de signal d'émission, à l'aide d'un module compensateur de défaut d'émission (27) couplé audit contrôleur.

**15.** Procédé selon la revendication 13, comprenant en outre l'étape consistant à retarder le signal en bande de base avant la détermination de la puissance du signal en bande de base et de la puissance du signal de réception, à l'aide d'un bloc de retard (90).

FIG. 1

EP 2 621 096 B1

FIG. 2

FIG. 3A

FIG. 3B

FIG. 3C

FIG. 3D

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2003045249 A